# EUROPEAN PATENT APPLICATION

(11) **EP 2 679 896 A1**
(43) Date of publication of application: **01.01.2014**
(21) Application number: 13159418.6
(22) Date of filing: 15.03.2013
(51) Int. Cl.: F21V 29/00, F21V 3/00, F21K 99/00, F21V 7/00, F21V 3/04, F21Y 101/02

(54) **Lighting device**

(30) Priority: 29.06.2012 JP 2012148047
(71) Applicant: Kabushiki Kaisha Toshiba, Tokyo (JP); Toshiba Lighting & Technology Corporation, Yokosuka-shi Kanagawa 237-8510 (JP)
(72) Inventor: Suzuki, Daigo, Tokyo (JP); Komatsu, Izuru, Tokyo (JP); Inoue, Michinobu, Tokyo (JP); Okada, Yasuhide, Tokyo (JP); Ioka, Kumiko, Tokyo (JP); Sakai, Makoto, Kanagawa, 237-8510 (JP); Hisayasu, Takeshi, Kanagawa, 237-8510 (JP); Terasaki, Hikaru, Kanagawa, 237-8510 (JP)
(74) Representative: Bokinge, Ole

(57) **Abstract**

According to one embodiment, a lighting device (1, 11) includes: a body section (2); a light source (3); a globe (5); and a reflecting section (9, 19). The light source (3) is provided on one end portion (2a) of the body section (2) and has a light emitting element (3b). The globe (5) is provided so as to cover the light source (3). The reflecting section (9, 19) is provided opposite to the light source (3). A surface of the reflecting section (9, 19) on opposite side from the light source side is exposed from the globe (5).

## Description

### FIELD

Embodiments described herein relate generally to a lighting device.

### BACKGROUND

Recently, instead of incandescent bulbs (filament bulbs), there has been progress in the practical application of lighting devices in which light emitting elements such as light emitting diodes (LED), organic light emitting diodes, EL (electroluminescence) elements, and semiconductor lasers are used as light sources.

Lighting devices using light emitting elements such as light emitting diodes have long lifetime and can reduce power consumption. Thus, such lighting devices are expected to replace existing incandescent bulbs.

However, when a light emitting element such as a light emitting diode is used as a light source, the problem is that the light distribution angle is narrower than that of the incandescent bulb.

A possible solution to this problem is to expand the light distribution angle by providing a reflecting mirror inside the globe.

However, it is desirable to develop a lighting device capable of further expanding the light distribution angle.

### BRIEF DESCRIPTION OF THE DRAWINGS

FIG. 1 is a schematic partial sectional view for illustrating a lighting device according to a first embodiment;
FIGS. 2A and 2B are schematic views for illustrating a light distribution angle of the lighting device;
FIG. 3 is a schematic graph for illustrating the light distribution angle of the lighting device;
FIG. 4 is a schematic sectional view for illustrating a reflecting section having an inclined surface;
FIG. 5A is a schematic graph for illustrating a relationship between an outline dimension of a reflecting section and a light distribution angle;
FIG. 5B is a schematic graph for illustrating a relationship between a height dimension being an attachment position of the reflecting section and the light distribution angle.
FIG. 6A is a schematic graph for illustrating a relationship between a thickness of a globe and the light distribution angle;
FIG. 6B is a schematic graph for illustrating a relationship between a height dimension of an outermost diameter portion of the globe and the light distribution angle;
FIGS. 7A and 7B are schematic partial sectional views for illustrating a lighting device according to a second embodiment;
FIGS. 8A and 8B are schematic views for illustrating heat dissipation in a lighting device;
FIGS. 9A and 9B are schematic views for illustrating a heat transfer section having an opening;
FIG. 10 is a schematic partial sectional view for illustrating an opening according to an alternative embodiment; and
FIG. 11 is a schematic sectional view for illustrating a translucent section provided in a reflecting section.

### DETAILED DESCRIPTION

In general, according to one embodiment, a lighting device includes: a body section; a light source provided on one end portion of the body section and having a light emitting element; a globe provided so as to cover the light source; and a reflecting section provided opposite to the light source, a surface of the reflecting section on opposite side from the light source side being exposed from the globe.

Embodiments will now be illustrated with reference to the drawings. In the drawings, similar components are labeled with like reference numerals, and the detailed description thereof is omitted appropriately.

### [First embodiment]

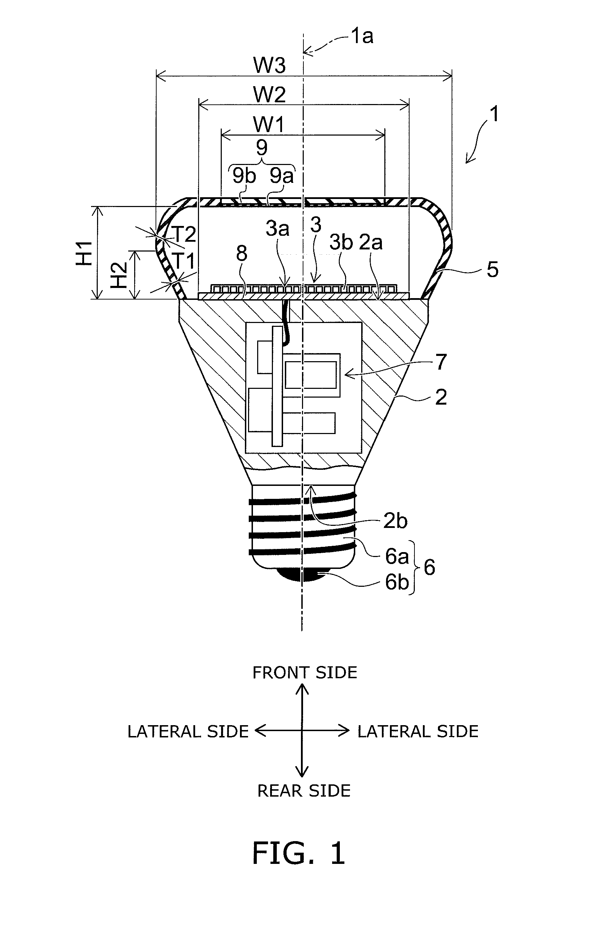

FIG. 1 is a schematic partial sectional view for illustrating a lighting device according to a first embodiment.

As shown in FIG. 1, the lighting device 1 includes a body section 2, a light source 3, a globe 5, a base section 6, a control section 7, and a reflecting section 9.

The body section 2 can be shaped so that, for instance, the cross-sectional area in the direction perpendicular to the central axis 1a gradually increases from the base section 6 side toward the globe 5 side. However, the shape is not limited thereto. For instance, the shape can be appropriately changed depending on e.g. the size of the light source 3, the globe 5, and the base section 6. In this case, the shape can be made approximate to the shape of the neck portion of an incandescent bulb. This can facilitate replacement for existing incandescent bulbs.

The body section 2 can be formed from e.g. a material having high thermal conductivity. The body section 2 can be formed from e.g. a metal material such as aluminum (Al), copper (Cu), and magnesium alloy. However, the material is not limited to metal materials. The body section 2 can also be formed from e.g. an inorganic material such as aluminum nitride (AIN), or an organic material such as high thermal conductivity resin.

Various kinds of surface treatment, such as painting, coating, chemical treatment, can be applied to the surface of the body section 2. In order to enhance a thermal radiation, a thermal emissivity of the surface of the body section 2 is preferably high. In a case of painting or coating, the thermal emissivity of the surface of the body section 2 may become higher than that of the metal surface by virtue of organic material which is included in the paint or coat. Among various selective pigments, ones which do not include metal fillers are more preferable. For example, as a white paint or coat, white paint of polyester resin, white paint of acryl resin, white paint of epoxy resin, white paint of silicone resin, and white paint of urethane resin which include at least one kind of white pigment can be used. As the white pigment, metal oxide can be used. As the metal oxide, one of titanium oxide (TiO2), zinc oxide (ZnO), barium sulfate (BaSO4), magnesium oxide (MgO) can be used. Two or more white paints can be appropriately mixed.

In a case of applying the chemical treatment, oxidation of the metal surface is preferably used. For example, an alumite treatment which forms an anodic oxidized skin layer can be used.

The light source 3 is provided on the side provided with the globe 5 of the body section 2. The radiation surface 3a of the light source 3 is provided perpendicular to the central axis 1a of the lighting device 1. The light source 3 radiates light primarily toward the front side of the lighting device 1. The light source 3 can be configured to have e.g. a plurality of light emitting elements 3b. However, the number of light emitting elements 3b can be appropriately changed. One or more light emitting elements 3b can be provided depending on e.g. the purpose of the lighting device 1 and the size of the light emitting element 3b.

The direction of the radiation surface 3a of the light source 3 is also not limited to that illustrated. For instance, the radiation surface 3a may be provided so as to be inclined with respect to the central axis 1a of the lighting device 1.

The light emitting element 3b can be e.g. what is called a self-emitting element such as a light emitting diode, organic light emitting diode, and laser diode. In the case where a plurality of light emitting elements 3b are provided, they can be provided in a regular arrangement pattern such as a matrix, staggered, and radial pattern, or in an arbitrary arrangement pattern.

The globe 5 is provided on one end portion 2a of the body section 2 so as to cover the light source 3. The globe 5 can be configured to have a shape protruding to the radiation direction of light. The globe 5 is translucent so that the light radiated from the light source 3 can be emitted out to the outside of the lighting device 1. The globe 5 can be formed from a translucent material. For instance, the globe 5 can be formed from e.g. glass or transparent resin such as polycarbonate. As necessary, a diffusing agent or phosphor can be applied to the inner surface of the globe 5, or dispersed inside the globe 5.

The light distribution angle can be expanded depending on the thickness T1, T2 and shape of the globe 5.

The relation of the thickness T1, T2 and shape of the globe 5 to the light distribution angle will be described later.

The base section 6 is provided on the end portion 2b on the opposite side of the body section 2 from the side provided with the globe 5. The base section 6 can be configured to have a shape attachable to the socket for receiving an incandescent bulb. The base section 6 can be configured to have a shape similar to e.g. E26 or E17 specified by the JIS standard. However, the base section 6 is not limited to the shape illustrated, but can be appropriately changed. For instance, the base section 6 can also be configured to have pin-shaped terminals used for a fluorescent lamp, or an L-shaped terminal used for a ceiling hook.

The base section 6 can be formed from e.g. a conductive material such as metal. Alternatively, the portion electrically connected to the external power supply can be formed from a conductive material such as metal, and the remaining portion can be formed from e.g. resin.

The base section 6 illustrated in FIG. 1 includes a cylindrical shell portion 6a having a screw thread, and an eyelet portion 6b provided on the end portion of the shell portion 6a on the opposite side from the end portion provided on the body section 2. To the shell portion 6a and the eyelet portion 6b, the control section 7 described later is electrically connected. This enables the control section 7 to be electrically connected to the external power supply, not shown, through the shell portion 6a and the eyelet portion 6b. Here, in the case where the body section 2 is formed from e.g. metal, an insulating section formed from e.g. an adhesive can be provided between the body section 2 and the base section 6.

The control section 7 is provided in the space formed inside the body section 2. Here, an insulating section, not shown, for electrical insulation can be appropriately provided between the body section 2 and the control section 7.

The control section 7 can be configured to have a lighting circuit for supplying electrical power to the light source 3. In this case, the lighting circuit can be configured, for instance, to convert the AC 100 V commercial power to DC and to supply it to the light source 3. Furthermore, the control section 7 can also be configured to have a dimming circuit for dimming the light source 3. Here, in the case where a plurality of light emitting elements 3b are provided, the dimming circuit can be configured to perform dimming for each light emitting element 3b, or for each group of light emitting elements 3b.

A substrate 8 is provided between the light source 3 and the body section 2.

The substrate 8 can be formed from e.g. a material having high thermal conductivity. The substrate 8 can be formed from e.g. a metal material such as aluminum (Al), copper (Cu), iron (Fe) and an alloy thereof. A wiring pattern, not shown, can be formed on the surface of the substrate 8 via an insulating layer. This facilitates electrically connecting the light source 3 to the control section 7 via the wiring pattern, not shown. Furthermore, heat generated in the light source 3 can be easily dissipated to the outside through the substrate 8 and the body section 2. Alternatively, the substrate 8 can be configured so that a wiring pattern is formed on the surface of a ceramic base material.

Here, if the light source 3 having a light emitting element 3b is provided on the end portion 2a of the body section 2, the problem is that the light distribution angle is narrower than that of the incandescent bulb.

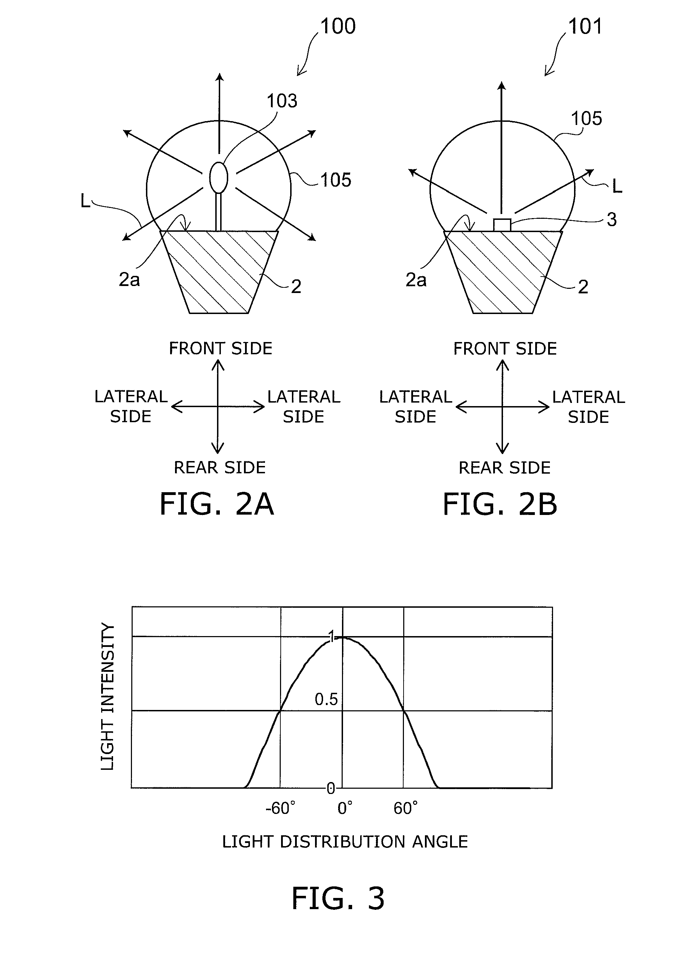

FIGS. 2A and 2B are schematic views for illustrating the light distribution angle of the lighting device.

FIG. 2A is a schematic view for illustrating the light distribution angle of an incandescent bulb. FIG. 2B is a schematic view for illustrating the light distribution angle of a lighting device provided with the light source 3 having a light emitting element 3b.

As shown in FIG. 2A, in the case of the incandescent bulb 100, a filament 103 serving as a light emitter is located around the center of the globe 105. Thus, the light L radiated from the filament 103 is radiated not only to the front side and lateral side of the incandescent bulb 100 but also to the rear side of the incandescent bulb 100.

In contrast, as shown in FIG. 2B, if the light source 3 having a light emitting element 3b is provided on the end portion 2a of the body section 2, the light L radiated from the light source 3 is more likely to be radiated to the front side of the lighting device 101. However, the light L is less likely to be radiated to the rear side of the lighting device 101.

FIG. 3 is a schematic graph for illustrating the light distribution angle of the lighting device 101 illustrated in FIG. 2B.

As shown in FIG. 3, in the case of the lighting device 101, the light distribution angle is approximately 120°.

In this case, the light distribution angle can be expanded by three-dimensionally arranging a plurality of light sources 3. However, it is technically difficult to three-dimensionally arrange a plurality of light sources 3. This also incurs the increase of product cost.

Thus, in the lighting device 1 according to this embodiment, a reflecting section 9 is provided to expand the light distribution angle.

Furthermore, the heat generated in the light source 3 is dissipated to the outside through the substrate 8 and the body section 2.

However, in view of increasing the current inputted to the light source 3 to further increase the luminous flux of the lighting device 1, it is desirable to improve heat dissipation.

Thus, in the lighting device 1 according to this embodiment, the heat generated in the light source 3 is dissipated to the outside through the reflecting section 9.

As shown in FIG. 1, the reflecting section 9 is shaped like a plate and provided opposite to the light source 3.

The surface on the light source 3 side of the reflecting section 9 is exposed to the inside of the globe 5.

The surface of the reflecting section 9 on the opposite side from the light source 3 side is exposed to the outside of the globe 5.

The reflecting section 9 can be configured to have e.g. a reflecting section body 9b and a reflecting layer 9a provided on the surface of the reflecting section body 9b.

The reflecting layer 9a can be configured to have higher reflectance than the globe 5.

The reflecting layer 9a thus provided is preferably such that, for instance, the reflectance to the light radiated from the light source 3 is 90% or more.

The reflecting layer 9a only needs to be provided at least on the surface on the light source 3 side of the reflecting section body 9b.

The reflecting layer 9a may be provided on the entire surface of the reflecting section body 9b.

The reflecting layer 9a can be a layer formed by applying e.g. white resin to the surface of the reflecting section body 9b.

However, the reflecting layer 9a is not limited thereto. For instance, the reflecting layer 9a can be a layer formed by coating with a metal having high reflectance such as silver and aluminum. Furthermore, the color of the resin is not limited to white, but can be appropriately changed.

The method for forming the reflecting layer 9a is not limited to application and coating. For instance, the reflecting layer 9a may be previously formed into a film shape and bonded to the surface of the reflecting section body 9b.

The reflecting section body 9b can be configured to have higher thermal conductivity than the globe 5.

The reflecting section body 9b can be formed from e.g. a metal material such as aluminum (Al), copper (Cu), and magnesium alloy. However, the material is not limited to metal materials. The reflecting section body 9b can also be formed from e.g. an inorganic material such as aluminum nitride (AIN), or an organic material such as high thermal conductivity resin.

As described above, the surface on the light source 3 side of the reflecting section 9 is exposed to the inside of the globe 5. Furthermore, a reflecting layer 9a is provided on the surface on the light source 3 side of the reflecting section body 9b. That is, the reflecting layer 9a is exposed to the inside of the globe 5 and faces the light source 3.

Thus, the light radiated from the light source 3 and directed to the reflecting section 9 can be made directly incident on the reflecting layer 9a.

As a result, the light radiated from the light source 3 and directed to the reflecting section 9 can be efficiently reflected by the reflecting layer 9a.

The light reflected by the reflecting layer 9a is radiated to the lateral side and the rear side of the lighting device 1. Thus, the light distribution angle can be expanded.

The heat generated in the light source 3 is transferred to the reflecting section 9 by convection and radiation.

Here, the reflecting section 9 is provided opposite to the light source 3. Thus, heat transfer by radiation is efficiently performed.

Furthermore, the surface of the reflecting section 9 on the opposite side from the light source 3 side is exposed to the outside of the globe 5. Thus, the heat transferred to the reflecting section 9 can be efficiently dissipated to the outside.

Here, the reflecting section body 9b is formed from a material having high thermal conductivity. Thus, the heat can be dissipated to the outside more efficiently.

A surface treatment, such as painting, coating, chemical treatment, which forms a surface having a high thermal emissivity can be applied to form the reflecting layer 9a in order to improve a thermal dissipation through a thermal radiation. In a case of painting or coating, the thermal emissivity of the reflecting layer 9a may become higher than that of the metal surface by virtue of organic material which is included in the paint or coat. Among various selective pigments, ones which do not include metal fillers are more preferable. For example, as a white paint or coat, white paint of polyester resin, white paint of acryl resin, white paint of epoxy resin, white paint of silicone resin, and white paint of urethane resin which include at least one kind of white pigment can be used. As the white pigment, metal oxide can be used. As the metal oxide, one of titanium oxide (TiO2), zinc oxide (ZnO), barium sulfate (BaSO4), magnesium oxide (MgO) can be used. Two or more white paints can be appropriately mixed.

In a case of applying the chemical treatment, oxidation of the metal surface is preferably used. For example, an alumite treatment which forms an anodic oxidized skin layer can be used to form the reflecting layer 9a.

As the material of the reflecting layer 9a, it is preferable to use material having a reflectance not less than 90 percent to the light emitted from the light source 3. Therefore, it is more preferable to use white painting or white coating which has high reflectance in a wavelength region of a visible light, and high absorbance in a wavelength region of an infrared light.

The front surface and the rear surface of the reflecting layer 9a may be made by different materials or by different treatment from each other. For example, the front surface (the surface facing the light source 3) of the reflecting layer 9a may have a high reflectance in a wavelength region of a visible light, and the rear surface of the reflecting layer 9a may have a high absorbance in a wavelength region of an infrared light.

The methods to form the reflecting layer 9a are not limited to the painting and coating. For example, film or sheet can be used as the reflecting layer 9a, which is bonded on the reflecting section body 9b.

The shape of the reflecting section 9 in the direction perpendicular to the central axis 1a of the lighting device 1 (planar shape) is not particularly limited. However, the shape is preferably a shape rotationally symmetric about the central axis 1a.

If the reflecting section 9 has a shape rotationally symmetric about the central axis 1a, the light can be radiated symmetrically about the central axis 1a.

For instance, the reflecting section 9 can be shaped like a disk.

The thickness dimension of the reflecting section 9 can be made e.g. nearly constant as illustrated in FIG. 1.

However, the thickness dimension of the reflecting section 9 is not limited thereto. To further expand the light distribution angle, the reflecting section can be configured to have a changing thickness dimension (e.g., to have an inclined surface).

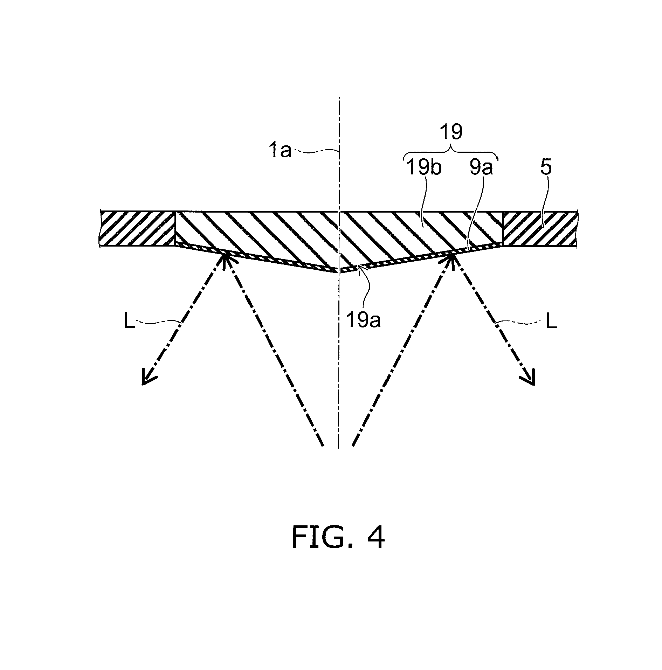

FIG. 4 is a schematic sectional view for illustrating a reflecting section 19 having an inclined surface.

As shown in FIG. 4, the reflecting section 19 has a reflecting section body 19b and the aforementioned reflecting layer 9a.

An inclined surface 19a is provided on the light source 3 side of the reflecting section body 19b. On the inclined surface 19a, the aforementioned reflecting layer 9a is provided. Here, the reflecting layer 9a may be provided on the entire surface of the reflecting section body 19b.

The inclined surface 19a can be inclined in a direction made close to the light source 3 toward the center side of the reflecting section body 19b.

The inclined surface 19a can be a flat surface or curved surface.

Preferably, the inclined surface 19a is provided symmetrically about the central axis 1a of the lighting device 1. If the inclined surface 19a is symmetric about the central axis 1a of the lighting device 1, the light can be radiated symmetrically about the central axis 1a.

The inclination angle of the inclined surface 19a is not particularly limited. The inclination angle of the inclined surface 19a can be appropriately changed depending on the distance between the light source 3 and the reflecting section 19 and the outline dimension of the reflecting section 19.

As shown in FIG. 4, the light L radiated from the light source 3 and directed to the reflecting section 19 is reflected by the reflecting layer 9a provided on the inclined surface 19a and radiated to the lateral side and the rear side of the lighting device 1.

Here, the inclined surface 19a is inclined so as to be made close to the light source 3 side toward the center side of the reflecting section 19. Thus, the incident light is easily radiated to the lateral side and the rear side of the lighting device 1.

Thus, the light distribution angle can be further expanded.

Next, the influence of the outline dimension W1 of the reflecting section 9 and the attachment position of the reflecting section 9 exerting on the light distribution angle is described.

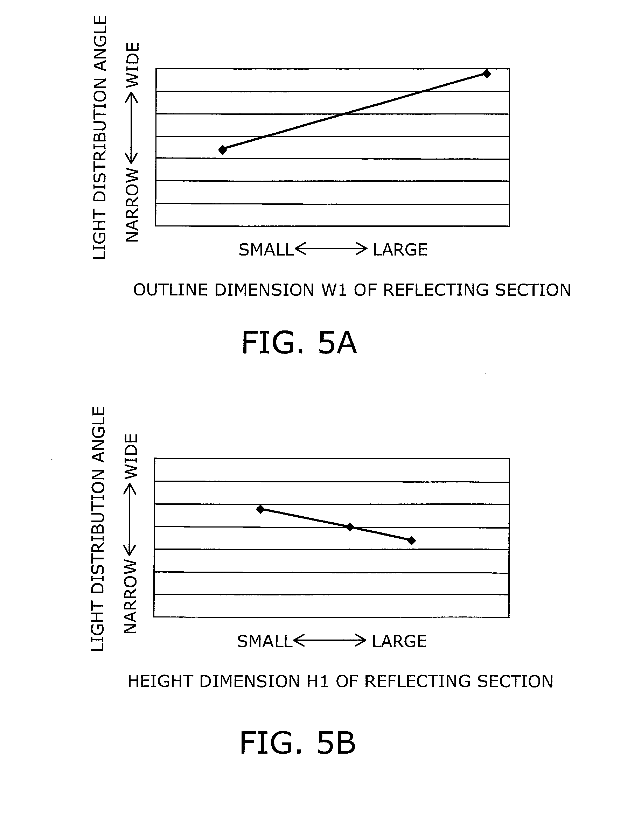

FIG. 5A is a schematic graph for illustrating the relationship between the outline dimension W1 of the reflecting section 9 and the light distribution angle.

Here, the outline dimension W1 of the reflecting section 9 is the dimension of the reflecting section 9 in the direction perpendicular to the central axis 1a of the lighting device 1 as shown in FIG. 1.

For instance, in the case where the reflecting section 9 is shaped like a disk, the outline dimension W1 of the reflecting section 9 is the diameter dimension of the disk.

As shown in FIG. 5A, if the outline dimension W1 of the reflecting section 9 is increased, the light distribution angle can be expanded.

In this case, if the outline dimension W1 of the reflecting section 9 is excessively increased, the light radiated to the front side of the lighting device 1 may be excessively decreased.

Thus, the outline dimension W1 of the reflecting section 9 is preferably made smaller than the outermost diameter dimension W3 of the globe 5.

Alternatively, the outline dimension W1 of the reflecting section 9 is preferably made smaller than the outline dimension W2 of the substrate 8.

Then, the light is radiated easily to the front side of the lighting device 1 via the outside of the reflecting section 9.

FIG. 5B is a schematic graph for illustrating the relationship between the height dimension H1 being the attachment position of the reflecting section 9 and the light distribution angle.

Here, the height dimension H1 of the reflecting section 9 is the dimension between the end portion 2a of the body section 2 and the surface on the light source 3 side of the reflecting section 9 as shown in FIG. 1.

As shown in FIG. 5B, if the height dimension H1 of the reflecting section 9 is decreased, that is, if the reflecting section 9 is made close to the light source 3, then the light distribution angle can be expanded.

That is, as shown in FIGS. 5A and 5B, the light distribution angle can be expanded by increasing the outline dimension W1 of the reflecting section 9 or decreasing the height dimension H1 of the reflecting section 9.

For instance, according to the knowledge obtained by the inventors, by appropriately setting the outline dimension W1 of the reflecting section 9, the light distribution angle can be made nearly three times compared with that illustrated in FIG. 3.

Next, the relation of the thickness T1, T2 and shape of the globe 5 to the light distribution angle is described.

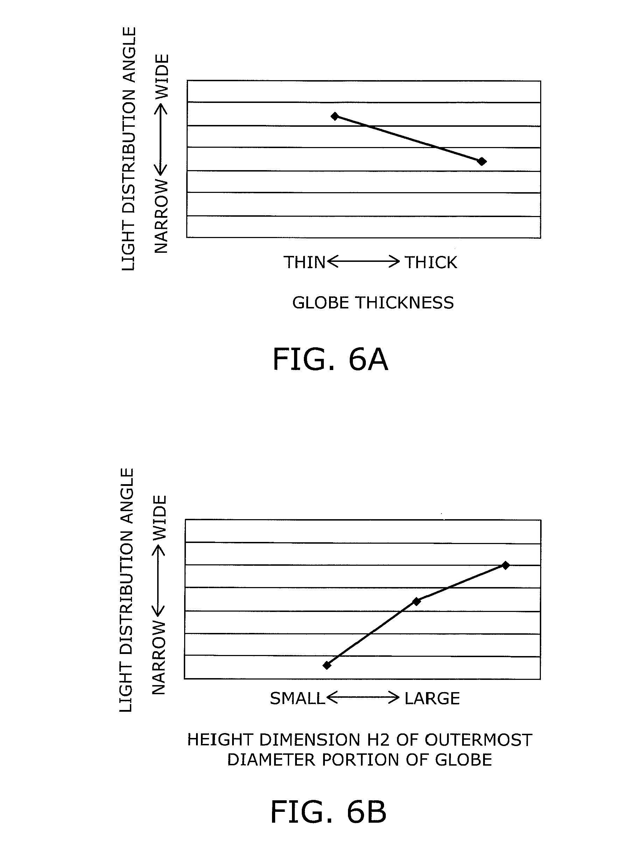

FIG. 6A is a schematic graph for illustrating the relationship between the thickness of the globe 5 and the light distribution angle.

As shown in FIG. 6A, according to the knowledge obtained by the inventors, the light distribution angle is expanded more easily when the thickness T1 on the light source 3 side of the globe 5 is made thinner than the thickness T2 on the reflecting section 9 side of the globe 5 as shown in FIG. 1, rather than when the thickness T1 on the light source 3 side of the globe 5 and the thickness T2 on the reflecting section 9 side of the globe 5 are made equal in dimension.

FIG. 6B is a schematic graph for illustrating the relationship between the height dimension H2 of the outermost diameter portion of the globe 5 and the light distribution angle.

As shown in FIG. 6B, if the height dimension H2 of the outermost diameter portion of the globe 5 is increased, that is, if the position of the outermost diameter portion of the globe 5 is made far from the light source 3, the light distribution angle can be expanded.

Furthermore, according to the knowledge obtained by the inventors, the light distribution angle is expanded more easily when the outermost diameter dimension W3 of the globe 5 is made larger than the diameter dimension of the end portion 2a of the body section 2.

In the case where the outermost diameter dimension W3 of the globe 5 is smaller than the diameter dimension of the end portion 2a of the body section 2, the outline dimension of the portion of the globe 5 in contact with the end portion 2a is made smaller than the outermost diameter dimension W3 of the globe 5.

Also in such cases, by providing e.g. a groove in the outer peripheral surface of the body section 2, the outermost diameter dimension W3 of the globe 5 in the portion provided with the groove can be made larger than the dimension of the body section 2.

Thus, in the case where the outermost diameter dimension W3 of the globe 5 is smaller than the diameter dimension of the end portion 2a of the body section 2, the light distribution angle is expanded more easily by providing e.g. a groove in the outer peripheral surface of the body section 2.

Thus, the light distribution angle can be expanded by making the thickness T1 on the light source 3 side of the globe 5 thinner than the thickness T2 on the reflecting section 9 side of the globe 5 or increasing the height dimension H2 of the outermost diameter portion of the globe 5.

For instance, according to the knowledge obtained by the inventors, by appropriately setting the height dimension H2 of the outermost diameter portion of the globe 5, the light distribution angle can be made nearly three times compared with that illustrated in FIG. 3.

### [Second embodiment]

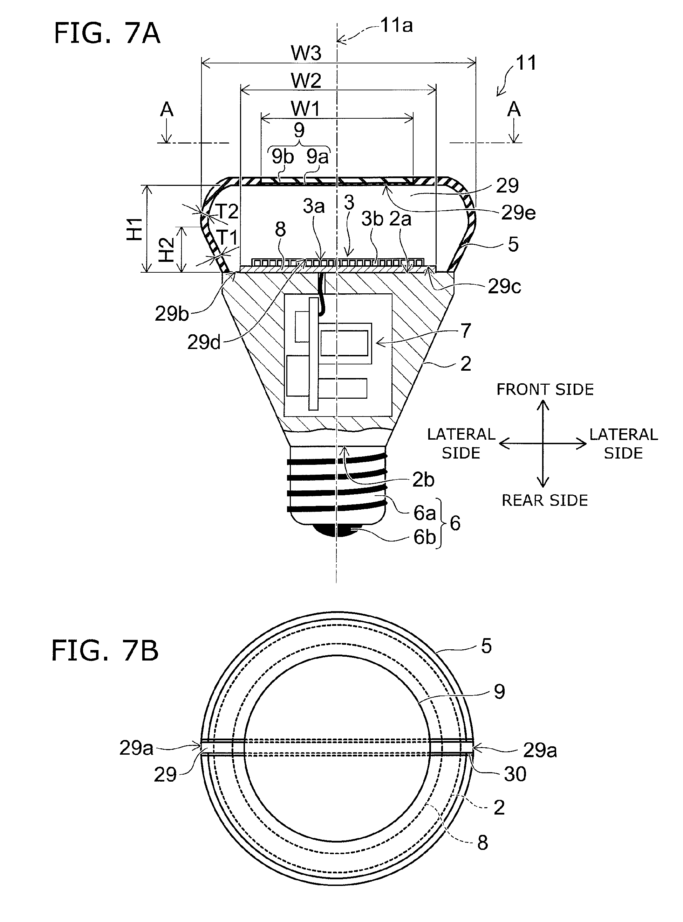

FIGS. 7A and 7B are schematic partial sectional views for illustrating a lighting device according to a second embodiment.

FIG. 7A is a schematic partial sectional view of the lighting device 11. FIG. 7B is a view taken in the direction of arrows A-A in FIG. 7A.

As shown in FIGS. 7A and 7B, the lighting device 11 includes a body section 2, a light source 3, a globe 5, a base section 6, a control section 7, and a reflecting section 9.

Furthermore, the lighting device 11 includes a heat transfer section 29.

As described above, the heat generated in the light source 3 is dissipated to the outside through the substrate 8 and the body section 2 by thermal conduction.

Furthermore, the heat generated in the light source 3 is dissipated to the outside through the reflecting section 9 by radiation and convection.

However, in view of increasing the current inputted to the light source 3 to further increase the luminous flux of the lighting device 11, it is desirable to further improve heat dissipation.

Thus, in the lighting device 11 according to this embodiment, the heat transfer section 29 is further provided.

As shown in FIGS. 7A and 7B, the heat transfer section 29 is provided inside the globe 5.

The end portion 29a on the globe 5 side of the heat transfer section 29 is exposed from the globe 5.

The end portion 29b on the body section 2 side of the heat transfer section 29 is at least partly in thermal contact with the end portion 2a of the body section 2.

The end portion 29c of the heat transfer section 29 is at least partly in thermal contact with the substrate 8.

The end portion 29d of the heat transfer section 29 is at least partly in thermal contact with the radiation surface 3a of the light source 3.

The end portion 29e on the reflecting section 9 side of the heat transfer section 29 is at least partly in thermal contact with the reflecting section 9.

In this case, the end portion 29b, the end portion 29c, the end portion 29d, and the end portion 29e do not necessarily need to be all in thermal contact, but it is sufficient that at least one of them be in thermal contact.

The end portion 29e may be in thermal contact with the globe 5 without being exposed from the globe 5.

However, if as many end portions as possible of the end portion 29b, the end portion 29c, the end portion 29d, and the end portion 29e are in thermal contact, or the end portion 29a is exposed from the globe 5, then the heat dissipation effect can be improved.

In this specification, "thermal contact" means that heat is transferred between the heat transfer section 29 and the mating member by at least one of thermal conduction, convection, and radiation.

For instance, the heat transfer section 29 may be abutted to transfer heat by thermal conduction. Alternatively, a small gap to the heat transfer section 29 may be provided to transfer heat by convection and radiation.

That is, the end portions 29a-29e of the heat transfer section 29 may be abutted to the mating member, or may be spaced therefrom to the extent that heat can be transferred.

In this case, by thermal conduction, the heat dissipation effect can be improved. Thus, the end portions 29a-29e of the heat transfer section 29 are preferably abutted to the mating member.

The thermal contact is not necessarily needed in the entire region of the end portions, but only needed in at least part of the end portions.

In this case, at least one of the end portion 2a of the body section 2, the substrate 8, and the radiation surface 3a of the light source 3 serves as a heat dissipation surface on the end portion 2a side of the body section 2.

Thus, the end portion of the heat transfer section 29 only needs to be at least partly in thermal contact with the heat dissipation surface on the end portion 2a side of the body section 2.

Furthermore, the end portion of the heat transfer section 29 only needs to be at least partly in thermal contact with the reflecting section 9.

However, more preferably, thermal contact is provided in as large a region as possible.

A contact section including a material having high thermal conductivity can be provided between the end portion of the heat transfer section 29 and the heat dissipation surface on the end portion 2a side of the body section 2.

For instance, the end portion 2a of the body section 2 and the end portion 29b of the heat transfer section 29 can be bonded with e.g. solder to provide a contact section. Furthermore, for instance, the substrate 8 and the end portion 29c of the heat transfer section 29 can be bonded with e.g. solder to provide a contact section. Furthermore, for instance, the radiation surface 3a of the light source 3 and the end portion 29d of the heat transfer section 29 can be bonded with e.g. a high heat transfer adhesive added with ceramic filler having high thermal conductivity to provide a contact section. Furthermore, for instance, the reflecting section 9 and the end portion 29e of the heat transfer section 29 can be bonded with e.g. solder to provide a contact section.

In the case where the end portion 29a of the heat transfer section 29 is not exposed from the globe 5, a contact section including a material having high thermal conductivity can be provided between the inner surface of the globe 5 and the end portion 29a of the heat transfer section 29.

For instance, the inner surface of the globe 5 and the end portion 29a of the heat transfer section 29 can be bonded with e.g. a high heat transfer adhesive added with ceramic filler having high thermal conductivity to provide a contact section.

The end portions 29a-29e of the heat transfer section 29 may be brought into thermal contact with the mating side simply by abutment. However, if the end portions 29a-29e of the heat transfer section 29 are brought into contact with the mating side via a contact section including a material having high thermal conductivity, the thermal resistance can be decreased. Thus, the heat dissipation effect can be further improved.

Furthermore, the heat transfer section 29 and the reflecting section body 9b may be integrally formed. Alternatively, the heat transfer section 29, the reflecting section body 9b, and the body section 2 may be integrally formed. Then, the heat dissipation effect can be further improved.

The heat transfer section 29 can be formed from a material having high thermal conductivity. The heat transfer section 29 can be formed from e.g. a metal material such as aluminum (Al), copper (Cu), and magnesium alloy. However, the material is not limited thereto. The heat transfer section 29 can also be formed from e.g. an inorganic material such as aluminum nitride (AIN), or an organic material such as high thermal conductivity resin.

Here, if the heat transfer section 29 is simply provided inside the globe 5, the difference between the light portion and the dark portion occurring on the globe 5 is increased. This may increase the brightness unevenness in the lighting device 11.

Thus, the heat transfer section 29 is configured to be able to reflect the light radiated from the light source 3.

In this case, for instance, the heat transfer section 29 can be configured to have higher reflectance than the globe 5.

For instance, the heat transfer section 29 can be configured to have a reflecting layer 30 on its surface.

The reflecting layer 30 thus provided is preferably such that, for instance, the reflectance to the light radiated from the light source 3 is 90% or more.

In this case, the reflecting layer 30 can be made similar to the aforementioned reflecting layer 9a.

The reflecting layer 30 can be a layer formed by applying e.g. white resin to the surface of the heat transfer section 29.

However, the reflecting layer 30 is not limited thereto, but can be a layer formed from a material such that the reflectance to the light radiated from the light source 3 is 90% or more. For instance, the reflecting layer 30 can be a layer formed by coating with a metal having high reflectance such as silver and aluminum. Furthermore, the color of the resin is not limited to white, but can be appropriately changed. The method for forming the reflecting layer 30 is not limited to application and coating. For instance, the reflecting layer 30 may also be previously formed into a film shape and bonded to the surface of the heat transfer section 29.

Here, the heat transfer section 29 itself may be formed from a material having high reflectance.

As illustrated in FIG. 7B, the heat transfer section 29 can be shaped like a plate.

The heat transfer section 29 shaped like a plate facilitates integrally forming the reflecting section 9 and the heat transfer section 29.

However, the shape of the heat transfer section 29 is not limited thereto, but can be appropriately changed.

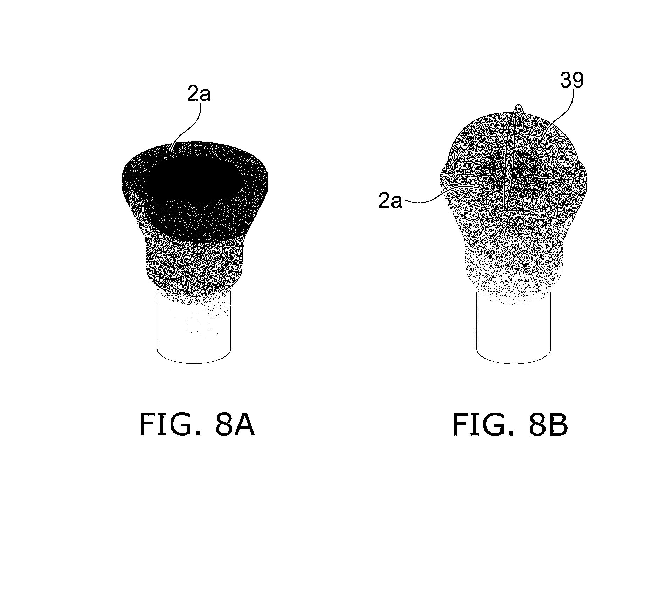

For instance, the heat transfer section 29 can be configured to have an intersecting form of a plurality of plate-like bodies. For instance, as illustrated in FIG. 8B, the heat transfer section 39 can be configured to have a crossed form of two plate-like bodies.

Furthermore, the heat transfer section 29 can be configured to have a shape rotationally symmetric about the central axis 11a of the lighting device 11.

If the heat transfer section 29 has a shape rotationally symmetric about the central axis 11a of the lighting device 11, the brightness in the respective regions defined by the heat transfer section 29 in the globe 5 can be made equivalent to each other.

Thus, the difference between the light portion and the dark portion occurring on the globe 5 can be decreased. This can decrease the brightness unevenness in the lighting device 11.

FIGS. 8A and 8B are schematic views for illustrating heat dissipation in the lighting device.

FIG. 8A is a schematic view for illustrating the temperature distribution near the end portion 2a of the body section 2 in the case where the heat transfer section 39 is not provided. FIG. 8B is a schematic view for illustrating the temperature distribution near the end portion 2a of the body section 2 in the case where the heat transfer section 39 having a crossed form of two plate-like bodies is provided.

FIGS. 8A and 8B show the temperature distributions of the lighting device determined by simulation, with the output of the light source 3 set to approximately 5 W (watts), and the ambient temperature set to approximately 25°C.

In FIGS. 8A and 8B, the temperature distribution is represented by monotone shading, with a higher temperature shaded darker and a lower temperature shaded lighter.

As shown in FIG. 8A, in the case where the heat transfer section 39 is not provided, the temperature near the end portion 2a of the body section 2 is increased.

On the other hand, in the case where the heat transfer section 39 is provided, as shown in FIG. 8B, the temperature in the end portion 2a of the body section 2 can be decreased.

That is, if the heat transfer section 39 is provided, heat can be dissipated also from the globe 5 side. Thus, the heat dissipation of the lighting device 11 can be improved. Accordingly, the lifetime of the lighting device 11 can be prolonged. Furthermore, the basic performance of the lighting device 11 such as higher luminous flux can be improved.

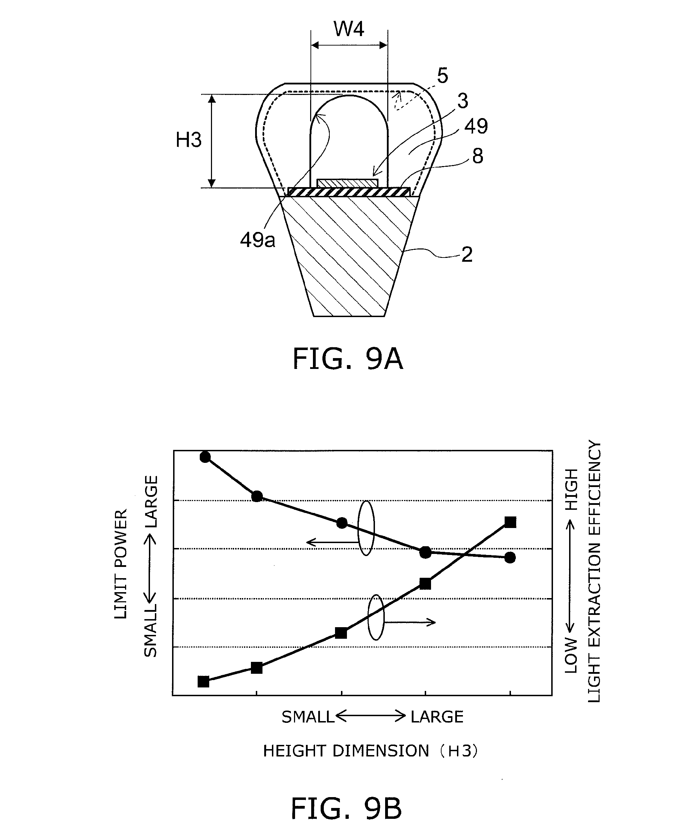

FIGS. 9A and 9B are schematic views for illustrating a heat transfer section having an opening.

FIG. 9A is a schematic partial sectional view for illustrating the heat transfer section having an opening. FIG. 9B is a schematic graph for illustrating the effect of providing an opening.

As shown in FIG. 9A, the heat transfer section 49 includes an opening 49a with height dimension H3.

The heat transfer section 49 has an opening 49a penetrating in its thickness direction.

Here, for instance, as in the example illustrated in FIGS. 7A and 7B, the light source 3 can be provided on the end portion 2a of the body section 2. Then, the heat transfer section 49 is provided at the position blocking the light radiated from the light source 3.

In this case, by providing an opening 49a, blocking of the light radiated from the light source 3 can be suppressed.

For instance, as shown in FIG. 9B, by increasing the height dimension H3 of the opening 49a, the light extraction efficiency can be increased. Here, FIG. 9B illustrates the case of changing the height dimension H3 of the opening 49a. However, the same applies to the case of changing the width dimension W4 of the opening 49a. That is, also by increasing the width dimension W4 of the opening 49a, the light extraction efficiency can be increased.

However, if an excessively large opening 49a is provided, then the amount of heat transfer by the heat transfer section 49, and hence the amount of heat dissipation, may be decreased.

In this case, if the height dimension H3 of the opening 49a is increased, the amount of heat dissipation by the heat transfer section 49 is decreased. This decreases the limit electrical power (the electrical power which can be inputted to the light emitting element 3b). Then, if the limit electrical power is decreased, the amount of light radiated from the light source 3 is decreased.

Thus, the size of the opening 49a can be appropriately determined by taking into consideration the characteristics of the light emitting element 3b, the increase of light extraction efficiency achieved by providing the opening 49a, and the decrease of heat dissipation due to the provision of the opening 49a.

In the example illustrated in FIG. 9A, the opening 49a opens in the end portion on the body section 2 side of the heat transfer section 49. However, the shape of the opening 49a and the position for providing the opening 49a can be appropriately changed.

However, the light extraction efficiency can be increased by providing the opening 49a at a position closer to the light source 3. Thus, as illustrated in FIG. 9A, the opening 49a is preferably configured so as to open in the end portion on the body section 2 side of the heat transfer section 49.

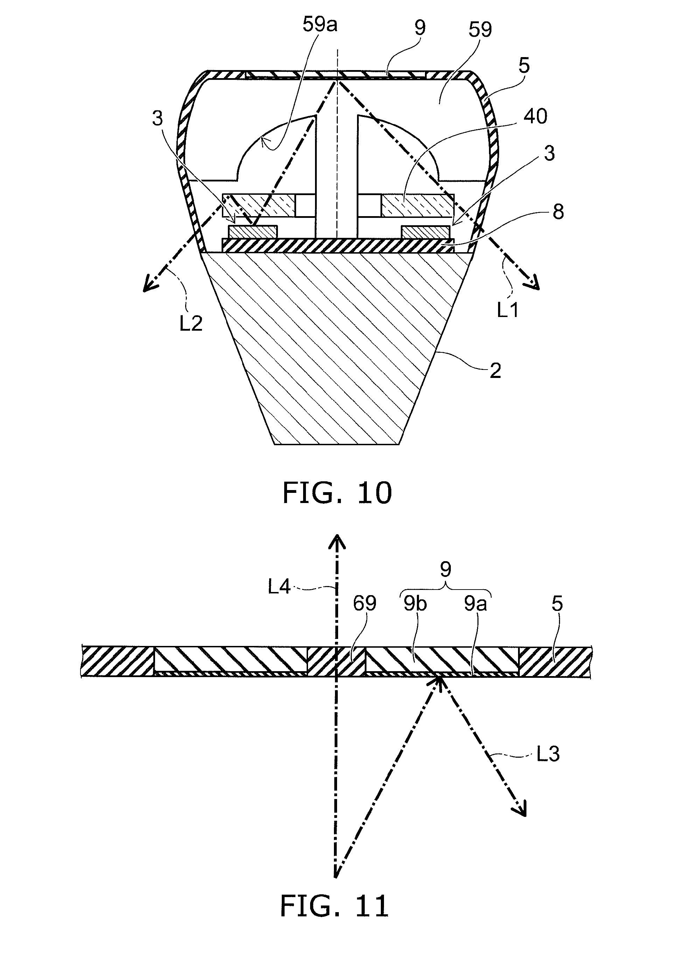

FIG. 10 is a schematic partial sectional view for illustrating an opening according to an alternative embodiment.

As shown in FIG. 10, the opening 59a provided in the heat transfer section 59 opens in the end portion on the body section 2 side and the end portion on the globe 5 side of the heat transfer section 59. The heat transfer section 59 is in contact with the substrate 8 on the center side and extends to the reflecting section 9 side. The heat transfer section 59 extends outward from the central axis of the lighting device along the shape of the globe 5. The cross section of the heat transfer section 59 including the central axis of the lighting device is shaped like an umbrella.

Here, the propagation and reflection in the globe 5 of part of the light radiated from the light source 3 are projected on the cross section of FIG. 10 and represented by dot-dashed lines (light L1, L2).

In this case, the opening 59a opens in the end portion on the globe 5 side of the heat transfer section 59. Then, as shown in FIG. 10, the light L1 radiated from the light source 3 and reflected at the reflecting section 9, and the light L2 reflected at the end surface of the lens 40, are radiated to the rear side of the lighting device. Thus, the light extraction efficiency can be increased, and the light distribution angle can be expanded.

This heat transfer section 59 can be entirely composed of one plate as shown in FIG. 10. Alternatively, the left half plate-like body and the right half plate-like body may be integrally formed, and these two plate-like bodies may be linked at e.g. the position indicated by the dashed line of FIG. 10. Alternatively, in the heat transfer section 59, the left half plate-like body and the right half plate-like body in FIG. 10 may be composed of separate bodies and connected on the dashed line of FIG. 10. To the heat transfer section 59, another separate plate-like body (not shown) may be added. The added plate-like body is brought into thermal contact with the heat transfer section 59 on the dashed line shown in FIG. 10, and can constitute part of the heat transfer section 59.

Furthermore, if the heat transfer section 59 is shaped like an umbrella, the light sources 3 can be arranged in an annular configuration. Furthermore, the light source 3 can be provided near the globe 5.

Furthermore, as shown in FIG. 10, an optical element such as an annular lens 40 can be easily provided.

In this case, there is no particular limitation on the position where the opening 59a opens in the end portion on the globe 5 side of the heat transfer section 59.

However, as shown in FIG. 10, if the opening 59a is configured to open at a position closer to the body section 2, the light extraction efficiency can be further increased, and the light distribution angle can be further expanded.

As described above, the opening can be configured to open in at least one of the end portion on the body section side of the heat transfer section and the end portion on the globe 5 side of the heat transfer section.

The foregoing relates to the case of expanding the light distribution angle. However, the embodiments are applicable also to the case of adjusting the light distribution angle depending on the purpose and the like of the lighting device.

For instance, a light distribution angle adapted to the purpose and the like of the lighting device can also be obtained by appropriately setting e.g. the inclination angle of the inclined surface 19a of the reflecting section 19, the outline dimension W1 of the reflecting section 9, the attachment position (height dimension H1) of the reflecting section 9, the thickness T1, T2 of the globe 5, the height dimension H2 of the outermost diameter portion of the globe 5, and the opening position of the opening 59a of the heat transfer section 59 described above.

Furthermore, depending on the purpose and the like of the lighting device, a translucent section 69 can be provided in the reflecting section 9 so that light is easily radiated to the front side of the lighting device.

FIG. 11 is a schematic sectional view for illustrating the translucent section 69 provided in the reflecting section 9.

The translucent section 69 is provided in a hole penetrating in the thickness direction of the reflecting section 9.

The translucent section 69 is formed from a translucent material.

The translucent section 69 can be formed from e.g. the same material as the globe 5.

As shown in FIG. 11, the light L3 radiated from the light source 3 and being incident on the reflecting section 9 is reflected. However, the light L4 incident on the translucent section 69 is transmitted through the translucent section 69 and radiated to the front side of the lighting device. Thus, light is easily radiated to the front side of the lighting device.

In this case, the size, number, layout, shape and the like of the translucent section 69 are not particularly limited, but can be appropriately set depending on the light distribution characteristics required by the purpose and the like of the lighting device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A lighting device (1, 11) comprising:
a body section (2);
a light source (3) provided on one end portion (2a) of the body section (2) and having a light emitting element (3b);
a globe (5) provided so as to cover the light source (3); and
a reflecting section (9, 19) provided opposite to the light source (3), a surface of the reflecting section on opposite side from the light source side being exposed from the globe (5).

2. The device according to claim 1, wherein a surface on the light source side of the reflecting section (9, 19) is exposed to inside of the globe (5).

3. The device according to one of claims 1 and 2, wherein
the reflecting section (9, 19) has a reflecting section body (9b, 19b) and a reflecting layer (9a) provided at least on a surface on the light source side of the reflecting section body, and
thermal conductivity of the reflecting section body is higher than thermal conductivity of the globe.

4. The device according to claim 3, wherein reflectance of the reflecting layer (9a) is higher than reflectance of the globe (5).

5. The device according to one of claims 3 and 4, wherein reflectance of the reflecting layer (9a) to light radiated from the light source (3) is 90% or more.

6. The device according to one of claims 3-5, wherein the reflecting layer (9a) is provided on the surface on the light source side of the reflecting section body (9b, 19b).

7. The device according to one of claims 3-6, wherein the reflecting layer (9a) is exposed to inside of the globe (5) and faces the light source (3).

8. The device according to one of claims 1-7, wherein shape of the reflecting section (9, 19) in a direction perpendicular to central axis (1a, 19a) of the lighting device (1, 11) is rotationally symmetric about the central axis.

9. The device according to one of claims 3-8, wherein an inclined surface (19a) is provided on the light source side of the reflecting section body (9, 19).

10. The device according to claim 9, wherein the inclined surface (19a) is inclined in a direction made close to the light source (3) toward center side of the reflecting section body (19b).

11. The device according to one of claims 9 and 10, wherein the inclined surface (19a) is provided symmetrically about central axis (1a, 11a) of the lighting device (1, 11).

12. The device according to one of claims 9-11, wherein the reflecting layer (9a) is provided on the inclined surface (19a).

13. The device according to one of claims 1-12, wherein outline dimension (W3) of the reflecting section (9, 19) is smaller than outermost diameter dimension of the globe (5).

14. The device according to one of claims 1-13, further comprising:
a substrate (8) provided between the light source (3) and the body section (2),
wherein outline dimension (W1) of the reflecting section (9, 19) is smaller than outline dimension (W2) of the substrate (8).

15. The device according to one of claims 1-14, wherein thickness (T1) on the light source side of the globe (5) is thinner than thickness (T2) on the reflecting section side of the globe (5).

16. The device according to one of claims 1-15, wherein outermost diameter dimension (W3) of the globe (5) is larger than diameter dimension of an end portion (2a) on the light source side of the body section (2).

17. The device according to one of claims 1-16, wherein outline dimension of a portion of the globe (5) in contact with the body section (2) is smaller than outermost diameter dimension (W3) of the globe (5).

18. The device according to one of claims 1-17, further comprising:
a heat transfer section at least partly in thermal contact with a heat dissipation surface on a side of an end portion on the light source side of the body section and at least partly in thermal contact with the reflecting section.

19. The device according to claim 18, wherein the heat transfer section (29, 39, 49, 59) is provided inside the globe (5), and an end portion (29a) on the globe side of the heat transfer section is exposed from the globe (5).

20. The device according to one of claims 18 and 19, wherein the heat transfer section (29, 39, 49, 59) reflects light radiated from the light source (3).
